(19) Europäisches Patentamt
European Patent Office
Office européen des brevets

(11) **EP 2 750 432 A1**

(12) **EUROPEAN PATENT APPLICATION**

(43) Date of publication:
**02.07.2014 Bulletin 2014/27**

(51) Int Cl.:
**H04W 24/00** (2009.01)

(21) Application number: **12382546.5**

(22) Date of filing: **28.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefónica, S.A.**
**28013 Madrid (ES)**

(72) Inventors:
 • **Yusta Padilla, Eduardo**
  **28013 Madrid (ES)**

 • **Sierra Díaz, Ana María**
  **28013 Madrid (ES)**
 • **González Rodríguez, Beatriz**
  **28013 Madrid (ES)**
 • **Molinero Velasco, Francisco Javier**
  **28013 Madrid (ES)**

(74) Representative: **Carpintero Lopez, Francisco et al**
**Herrero & Asociados, S.L.**
**Alcalá, 35**
**28014 Madrid (ES)**

(54) **Method and system for predicting the channel usage**

(57)   A method and system for predicting the channel usage of a mobile network resource, the resource being shared among several entities of the mobile network. The method comprises: obtaining forecasted traffic Key Performance Indicators, KPIs, values of the resource from external inputs and from temporal series of KPIs stored in a mobile network operator database; determining a channel usage model based on current channel usage information, selected current traffic KPIs values of the resource and current network configuration information; and calculating the predicted channel usage applying the channel usage model determined to the forecasted traffic KPIs values and forecasted network configuration information.

FIG. 1

Description

## BACKGROUND OF THE INVENTION

**Technical field**

The present invention relates to the prediction of the channel usage of a mobile network resource where the resource is shared among several entities of the mobile network. The prediction involves network traffic related measurements and parameters associated to the network configuration, with the aim to predict high load levels in the channel usage in the short or medium term (considering several months).

**Description of related art**

Any Radio Access Network, RAN, deployed by a mobile operator is constantly changing, due to many factors: new technology arises, new applications are demanding higher bandwidth or throughput and the users are requiring higher Quality of Experience, QoE. So, continuous improvements in a RAN are essential to guarantee the ubiquity and quality required by the users. On the contrary, these improvements have a huge impact on both Capital Expenditure, CAPEX, and Operational Expenditure, OPEX, so it is mandatory for a mobile operator to take the right actions when and where they are most needed, assigning different priorities to the programmed actions on the network.

To do this, an operator must perform periodic load analyses to check which network entities are experiencing load issues. Cells, Nodes B and radio controllers have a number of shared resources (power, baseband processing, interface throughput, etc.) whose usage must be conveniently monitored in order to:

- Identify which network entities require an upgrade.
- Identify areas where individual upgrades would not solve the problems and other solutions, as the installation of new sites, are needed.

Once a mobile network is deployed and it comes into service, the operator needs feedback on the performance of every network entity in order to be able to optimize and evolve the complete network, so a vast amount of information must be continuously collected and stored in the operator's information systems. Periodically (for example, each 15 minutes), the values of the different counters available in the network entities (incremented each time a significant event takes place, as for example, a voice call is dropped, or a Radio Access Bearer, RAB is successfully established) are read and stored in the operator's databases. Using these counters, higher level information items called Key Performance Indicators, KPIs, are generated using different formulae and aggregation criteria, which are also stored in the operator's databases. In this way, the operator keeps a massive history of data characterizing the network performance during its operation. Additionally, apart from all the data related to the network performance, the information systems of the operator also include and store all the configuration parameters that define the way each entity in the access network is configured.

All these data constitute the base of the different optimization and network evolution processes. One of the latter ones is the high load analysis, which essentially consists of detecting which network entities are experiencing high load issues and determining which compromised resources in any of them are.

To determine that, the operator defines both the KPIs that characterize the usage of each resource (also refer to them as load KPIs) and the thresholds (normally dependent on the configuration parameters of the network entity) that should not be exceeded to ensure the good performance of the radio access network. To carry out the load analysis, the KPIs corresponding to the period being examined (normally several weeks of data are considered to avoid upgrading the network as a result of isolated load spikes, i.e., a criterion of persistence is applied) are obtained and evaluated. Using the results of the analysis the operator identifies where the network must be changed and selects the most efficient actions to evolve it.

However, evolving the network only as a result of the load analysis has a major drawback: the problems are detected and measures are planned once the high load situations have already been experienced, and the users have suffered the impact as degradation in the quality they perceive.

For a mobile operator it can be then highly interesting to find a way to balance the reactive nature of the high load analysis using a more proactive process able to identify beforehand the network entities that could be prone to experience load issues in a near future.

As it was explained previously, in the operator's network information systems there is stored what can be considered a huge series of snapshots of the network performance and its related conditions taken continuously during time. It seems then interesting to use all this knowledge about what has already happened to try to anticipate the future state of the network. There are several technologies that are usually used to take advantage of all the existing information.

As a first step machine learning techniques are applied in order to extract information from a data set and transform it into understandable data structures easier to use. The new data structures can then be used as input to machine learning algorithms and predictive analytics.

Using machine learning, different algorithms can be trained from examples extracted from existing data, so as to generalize knowledge to be able to produce an output in cases not previously observed. This way, once the learning by example process is complete, a set of attributes can be used to predict the value of another attribute.

In the case of traffic forecasting, a typical approach consists of applying time series analysis techniques. This is the most straightforward way to make a prediction on the future values of the load KPIs of a network entity. It consists of directly extracting from the operator's information systems the values of the load KPIs for a long record of past values and their evolution in time, in order to infer directly from them trending and seasonality information that can then be used to guess what the future situation of each load KPI could be.

The US patent 2011/0149782 A1 submitted by Cellco Partnership d/b/a Verizon Wireless disclosed a method to analyze sector capacity in data-only mobile wireless network, based on several linear regressions performed on the logarithms of the measurement quantities to measure aspects of current capacity of the resource and/or to estimate parameters relating to further capacity. The results obtained with this method were then used to analyze certain aspects of current capacity of the sector carriers (in a 1xEV-DO network) and/or to estimate parameters relating to further capacity (the analysis, for example, can be used to determine a growth factor, to determine at what future point a deficiency may exist).

Another approach to face the problem consists on the application of analytical models, based on mathematical formulae to model the behaviour of the load KPIs, based on a previous analysis of the different configuration parameters and general KPIs that could have impact on it. For each element in the formula (each configuration parameter or general KPI) a factor must be obtained to adjust the elements' weight into the whole formula. This process is not trivial, and typically intensive drive-test campaigns (operating a mobile phone through certain sectors of the network while walking or driving to get appropriate usage measurements) or laboratory measurements are needed to tune them and validate the formula. This approach is valid when no historical data are available.

The US patent 7,099,674 B2 submitted by Huawei Technologies disclosed an apparatus and method for implementing multi-traffic load monitoring and prediction in a CDMA cellular mobile communication system, to monitor and predict in real time the load of newly received traffic. The method therein was based on an analytical model that calculated relative values of various traffic loads comprising a received signal strength indication value, a transmission code rate, a frequency spread factor, a signal to interference ratio and traffic priority.

The main limitations perceived of time series analysis techniques are the ones listed below:

- It is necessary to have one trending line for each load resource, so it is mandatory to obtain historical data from the load resource that is under study. This information is stored and available in external storage units, connected to the OSS.
- It is also necessary to have one trending line for each cell. In order to decrease the error in prediction, one time series line valid for one resource in one cell does not necessarily follow the same trend as the same resource in other cell with a different configuration.
- This technique is not valid to perform 'what if?' analyses, modifying different related KPIs to assess their influence in the load KPI under study, as the input for this approach is directly the load KPI values in the past, but it does not take into account any other parameter that could be used to study how the load changes when the related parameters increase or decrease.
- The validity of this approach is limited when new configuration changes are applied in the network entity that is being monitored to predict its behavior in reference to a certain KPI. The trend that the KPI under study was following in the near past does not necessarily be equal to the trend when any configuration change has taken place.

Regarding analytical models the main limitations already identified are described below:

- One analytical model is needed for each load resource. This means that it is necessary to implement a complicated process that consists of two main tasks:

  ○ Previous validation with real data (based on drive-testing campaigns or real measurements in laboratories for equipment certification).
  ○ Tuned process of the factors associated to each variable in the formula (each input KPI) based on the results of the previous validation.

- Drive-testing is expensive and time-consuming, and the tuning process performed with it generates a formula fully valid for the cells that were considered in the drive-test campaign. For cells in other different radio conditions the formula can be applied but accuracy is not guaranteed.

- Additional tuning processes will be needed as the radio network is continuously evolving.

The relation between load and traffic in 2G systems is more straightforward because there is a direct link between traffic and resources consumption, and analytical models are well known and accepted.

On the contrary, for some resources of certain mobile (for example, 3G, Long Term Evolution, LTE and High Speed Packet Access, HSPA) network entities (for example, the High-Speed Downlink Packet Access, HSDPA, channels shared between the active users in a cell, or the $I_{ub}$ interface between the Nodes B and the Radio Network Controllers, RNCs) the complexity of the relationship between load and traffic in the 3G and HSPA radio mobile network makes it very difficult to develop appropriate analytical models without including important simplifications.

Therefore, there is a need for an accurate method to predict the resources usage in a general way.

## SUMMARY

The problems found in prior art techniques are generally solved or circumvented, and technical advantages are generally achieved by the disclosed embodiments which provide a method and system for predicting the channel usage of a mobile network resource, where the resource is shared among several entities of the mobile network.

In the present invention, the prediction of the channel usage of a mobile network is based on machine learning and knowledge discovery techniques that are applied to a huge amount of radio access network information (in terms of traffic and load KPIs and configuration parameters).

The invention allows predicting the behavior of certain network entities applying machine learning techniques to the available data stored in the mobile operator information systems. The present approach forecasts the future usage in the short/medium term (in the coming months) bearing in mind that the major issue is the complexity behind the resource usage in the mobile networks and the difficulty to establish a precise relation between the load KPIs and other inputs (mainly other traffic and/or load KPIs, marketing constraints, configuration changes, etc.).

From now on, the following definitions apply:

- Channel usage: Channel usage is defined as channel load, it may be expressed as percentage of its maximum value. These two terms can be used interchangeably throughout the document.
- Network configuration information: The network configuration is defined as a set of network element parameters as for example:

  ○ Number of activated mobile networks licenses,
  ○ Maximum radiated power, broken down by channel type,
  ○ Antenna tilts,
  ○ Mobile network activation status (activated/no activated),
  ○ Number of carriers (single, dual, others).
  ○ ...

- Channel usage model: The channel usage model consists on establishing a relation between the current resource channels usage, i.e. load, and two items: item number one, current traffic KPIs' behaviour, and, item number two, current network configuration information.
- Forecasted traffic KPI value: Forecasted traffic KPI value, or, in short, forecasted traffic KPI, is defined as the expected value of the traffic KPI in the future.
- Forecasted network configuration information: It can be the network configuration parameters status in the future. They can be equal or different from the current ones.

In a first aspect a method is provided for predicting the channel usage of a mobile network resource, the resource being shared among several entities of the mobile network, the method comprising:

a) obtaining forecasted traffic Key Performance Indicators, KPIs, values from external inputs and from temporal series of KPIs stored in a mobile network operator database;
b) determining a channel usage model based on current channel usage information, selected current traffic KPIs values and current network configuration information;
c) calculating the predicted channel usage applying the channel usage model determined to the forecasted traffic KPIs values and forecasted network configuration information.

In an embodiment, the external inputs for obtaining the forecasted traffic KPIs values comprise a number of expected users, and/or an expected traffic per user and/or an expected traffic per application.

The forecasted traffic KPIs values may consist on the expected variation of the KPIs as a function of time.

In an embodiment, the variation of the KPIs as a function of time is modeled as a concatenation of segments of KPIs values, each segment of KPIs having a certain length. In this embodiment, the length of each segment of KPIs may correspond to the time during which the external inputs and the seasonality of the temporal series of KPIs are stable. Preferably, the predicted segment of KPIs may have the slope of the former segment stored in a mobile network operator database which has the highest similitude to the predicted segment in terms of the seasonality of the temporal series and external inputs.

In an embodiment, the selection of the current traffic KPIs values comprises:

a) extracting the KPIs from operator databases;
b) calculating the correlation values between the data extracted in the previous step and the current channel usage;
c) discarding the data extracted with correlation values under a pre-establish threshold.

In an embodiment, the current network configuration comprises information about the network nodes present in the geographical area of analysis.

The channel usage model can be determined by applying machine learning algorithms to the current channel usage, the selected current traffic KPIs values and the current network configuration information.

The resource can be shared among several users or several cells of the mobile network.

In an embodiment, the traffic KPIs are extended traffic KPIs which include user data information, where said user data information is related to the channel usage.

In an embodiment, the resource is a High-Speed Downlink Packet Access, HSDPA, channel.

In another aspect, a system is provided for predicting the channel usage of a mobile network resource, the resource being shared among several entities of the mobile network, the system comprising:

a) means adapted to obtain a forecasted traffic Key Performance Indicators (KPIs) values from external inputs and from temporal series of KPIs stored in a mobile network operator database;
b) means adapted to determine a channel usage modeling based on current channel usage information, selected current traffic KPIs values and current network configuration information;
c) means adapted to calculate the predicted channel usage applying the channel usage model determined to the forecasted traffic KPIs values and forecasted network configuration information.

Also, a computer program comprising computer program code means adapted to perform the above-described method is presented.

Finally, a digital data storage medium storing a computer program product comprising instructions causing a computer executing the program adapted to perform the above-described method is presented.

Consequently, according to the invention, a method, system, computer program and digital data storage medium according to the independent claims are provided. Favorable embodiments are defined in the dependent claims.

These and other aspects of the invention will be apparent from and elucidated with reference to the embodiments described hereinafter.

## BRIEF DESCRIPTION OF THE DRAWINGS

Some embodiments of the method and device are now described, by way of example only, and with reference to the accompanying drawings, in which:

Figure 1 shows a block diagram process for obtaining the forecasted extended traffic KPIs values according to one embodiment of the present invention.

Figure 2 shows a block diagram process for obtaining the load-traffic-configuration model according to one embodiment of the present invention.

Figure 3 shows a block diagram process for predicting the channel usage according to the aim of the present invention according to one embodiment of the present invention.

Figure 4 shows an example of the traffic trending and seasonality for a single traffic KPI.

Figure 5 shows an example of the forecasted traffic KPI of the single traffic KPI shown in figure 4.

Figure 6 shows an example of a training data set for the obtaining of the channel usage model.

Figure 7 shows an example of a correlation graphic between the modeled and the real load KPI.

Figure 8 shows an example of an input file with the forecasted input data for obtaining the channel future usage.

Figure 9 shows the example of the figure 8 with the channel future usage and an associate load category for each cell.

Figure 10 shows a block diagram of an application of load thresholds to the channel future usage.

## DESCRIPTION OF EMBODIMENTS

The present embodiments may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The invention proposed herein tackles the prior art problems by providing a way of predicting the channel usage of a mobile network resource.

The invention can be expressed as formulae in the following manner:

$$\text{Channel future usage} = f_2 \text{ [forecasted extended traffic KPIs values, forecasted configuration parameters]}$$

where:

- Extended traffic KPIs values: The extended traffic KPIs values include a subset of network KPIs related to different kinds of traffic (for example: signalling, voice or data) and they also include user data with a significant impact in load forecasting, for example: number of users per cell.
- Formula $f_2$ will be given by the channel usage model which is based on the current resource usage, the current extended traffic KPIs values and the current network configuration information.
- Forecasted extended traffic KPIs values = $f_1$ [Traffic trending and seasonality temporal series, external inputs]
- Forecasted configuration parameters: The forecasted configuration parameters are external inputs extracted from the mobile operator's databases. Planned network elements' upgrades and planned new network elements in the near future are typically stored in the databases to be taken into account in another processes not dealing with this method, as for example in the coverage planning one.

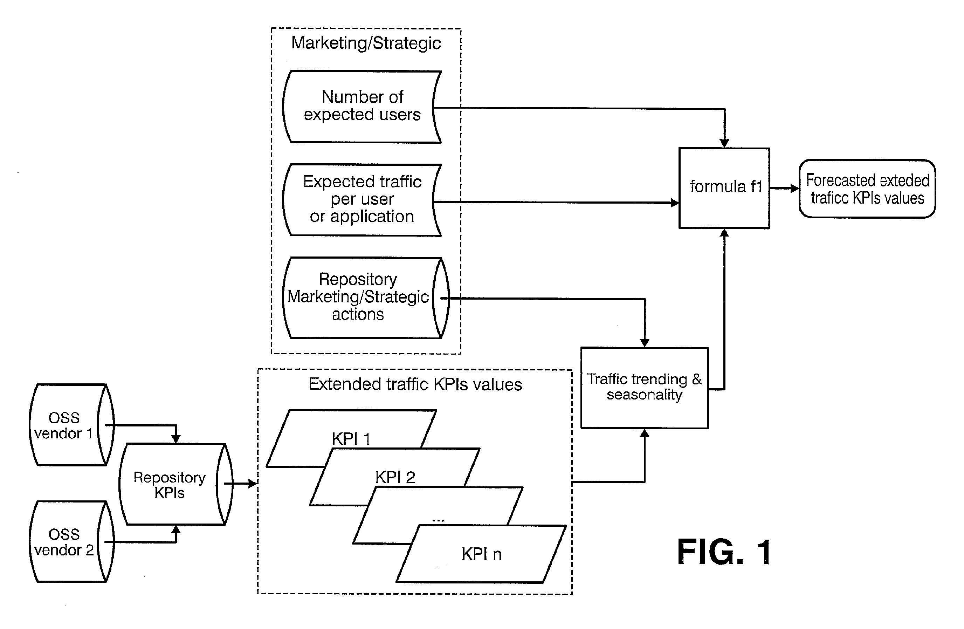

The figure 1 shows a method for obtaining the forecasted extended traffic KPIs values. As it has been stated before, the forecasted extended traffic KPI values are calculated by means of formula $f_1$:

$$\text{Forecasted extended traffic KPIs values} = f_1 \text{ [Traffic trending and seasonality temporal series, external inputs]}$$

where,

- Traffic trending and seasonality temporal series:
  The KPIs are expressed as temporal series. The series are obtained by conventional statistical processes from data stored in the operator database.
  The temporal series reflect trending and seasonality.
  As is shown in figure 1, the traffic trending and seasonality temporal series can be obtained from the repository marketing/strategic actions and from the current extended traffic KPIs which are, at the same time, obtained from the mobile network operator databases, as is shown, the repository KPIs, in turn fed from the Operational Support System, OSS, of vendor 1 and/or from the OSS of vendor 2.

- External inputs
  The external inputs that formula $f_1$ requires are at least one of the following:

○ Number of expected users.
○ Expected traffic per user.
○ Expected traffic per application.

The external input value standard source is the operator marketing department or the operator strategic department.

- Formula $f_1$
  Formula $f_1$ is the mathematical expression of the method for calculating the forecasted extended KPIs values, i.e., the expected variation of the KPI as a function of time.
  Each KPI is modeled as a concatenation of segments, each segment with a different slope. The segment length is the time during which there is no change in external inputs nor in seasonality. The slope of each future segment, i.e. a segment corresponding to a future time, is that of a former segment, i.e., a segment of a past time for which the slope is available, with the highest similitude to the future segment in terms of seasonality and external inputs. The similitude is calculated by conventional statistical procedures.

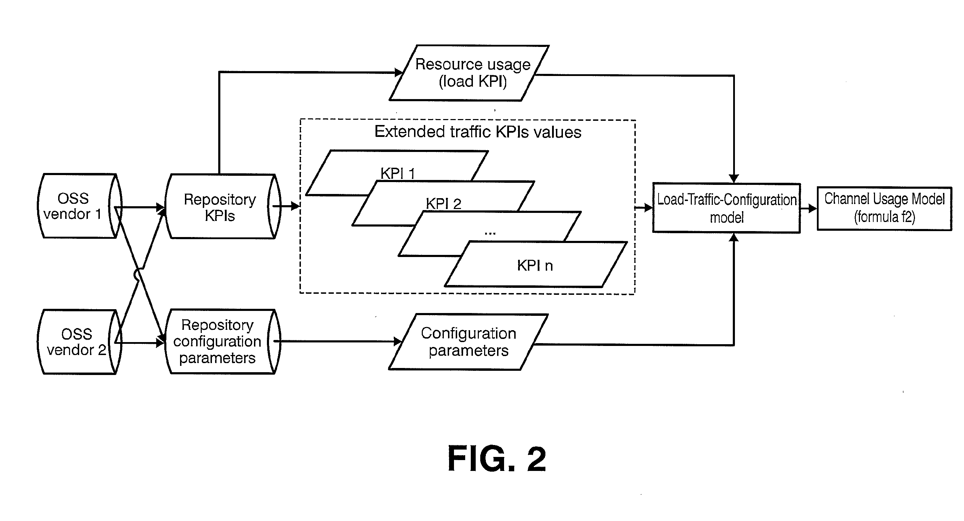

The figure 2 shows a method for obtaining the load-traffic-configuration model and from it, the channel usage model (formula $f_2$).

Obtaining the channel usage model consists on relating the current resource usage, i.e. load KPI, with two items, current extended traffic KPIs' behaviour and current configuration of network entities.

The channel usage model (formula $f_2$) relates traffic and network elements configurations to resource usage. The function obtained is valid for any appropriate combination of traffic and network elements' configurations in the future.

The channel usage model (formula $f_2$) groups three processes:

1. Conditioning of traffic KPI and user data (extended traffic KPIs).
2. Conditioning of configuration parameters.
3. Application of machine learning algorithms.

1. Conditioning of traffic KPI and user data (extended traffic KPIs).

Comprehensive information regarding the network and its usage, both in the past and in the present, is stored in databases. Querying the database it is possible to know the usage of any resource (i.e. load KPIs) of any network entity. In this context, figure 2 shows how the resource usage is obtained from a database with repository KPIs information. This repository KPI information can be obtained for example from an OSS vendor 1 and/or from an OSS vendor 2.

Querying the database it is also possible to know the traffic conditions (extended traffic KPIs values) and the configuration types (configuration parameters) responsible for that load level at specific intervals (15 minutes or an hour, depending on the granularity of the resource and the database). For example, for each cell there are records each 15 minutes stored in the database that show the extended traffic KPIs values and the load levels of the resources associated to the cells (power, channels, CPU...).

From the availability of the comprehensive information, the conditioning of traffic KPI and user data involves the following steps:

- Raw data extraction, i.e., collection of KPIs and user data which a priori are considered to have an impact on channel usage. In an extended extraction, the raw data could be all the KPIs and user data stored in the database.
- Calculation of correlation values between extracted KPIs and channel usage
- Selection of a set of KPIs, those with higher correlation values. All other KPIs are discarded.

The selected KPIs and user data are termed extended traffic KPIs values. As it is shown in figure 2, the extended traffic KPIs values are obtained from a database with repository KPIs information which can be, in turn, obtained from OSS vendor 1 and/or from OSS vendor 2.

2. Conditioning of configuration parameters.

The network configuration is defined as a set of network parameters that can be combined in multiple ways. Each combination of configuration parameters defines a different network configuration. In the invention the configurations are preferably reduced to a small number set that comprises information about the network nodes present in the geographical area of analysis.

As it is shown in figure 2, the configuration parameters are obtained from a database with repository configuration parameters information which can be, in turn, obtained from OSS vendor 1 and/or from OSS vendor 2.

3. Application of machine learning algorithms.

Once the extended traffic KPIs values have been determined and the configuration parameters established according to the previous steps, standard machine learning algorithms are employed to predict the resource usage (in one embodiment, the HSDPA channel usage). The algorithms use as error function the difference between the prediction and the actual usage values.

The machine learning algorithms are a choice or user parameter in the present invention. Examples of machine learning algorithms are Support Vector Machines, Neural Networks, and rule based models that combine rules based on the data with a linear regression for each rule.

The channel usage is modelled and, consequently, the function $f_2$ is obtained using said machine learning algorithms.

Figure 2 shows the method to obtain the load-traffic-configuration model and hence the channel usage model.

In the present invention, the channel future usage is calculated with the same formula $f_2$ built from current data. However, instead of using as inputs current values, forecasted input values are used, i.e.:

$$\text{Channel future usage} = f_2 \text{ [forecasted extended traffic KPIs values, forecasted configuration parameters]}$$

Where, as has been detailed previously, it is not necessary to forecast a large number of KPIs, but only a small subset which has been defined as extended traffic KPIs values. This removes the need to forecast a large number of KPIs.

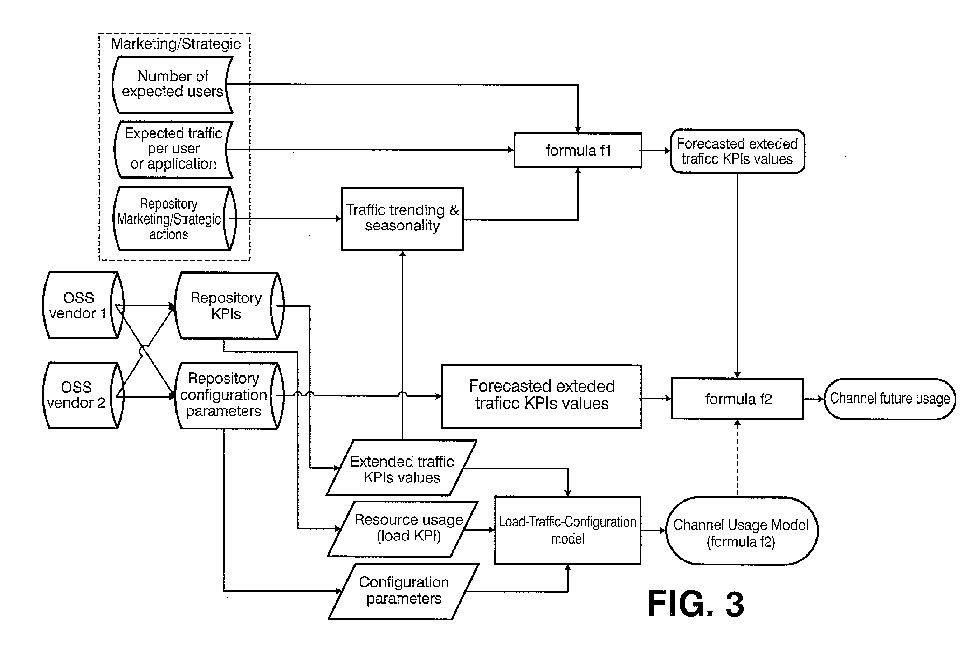

The figure 3 shows the method shown by figures 1 and 2 in order to obtain the channel future usage.

The present invention can be applied to predict the usage (or the load) of any shared resource of a mobile network.

Focusing the invention on an example of application, a method for predicting the load of a certain shared radio resource, such as the HSDPA channels' usage is stated below.

However, the method can be easily extrapolated to any other resource, not only radio ones, but any resource in any mobile network that suffers from congestion and where the way to predict the load is not evident due mainly to the fact that it is a shared resource among several users and/or several cells and the relationship between the inputs and the output is not obvious.

Some typical use cases are:

- cell power load (only applies to the downlink, from the base station to the mobile terminal)
- cell baseband hardware load (separate analysis for uplink and downlink)
- RNC processors' load
- $I_{ub}$ interface load.

**Method to predict the HSDPA channels' usage**

Forecasted extended traffic KPIs values

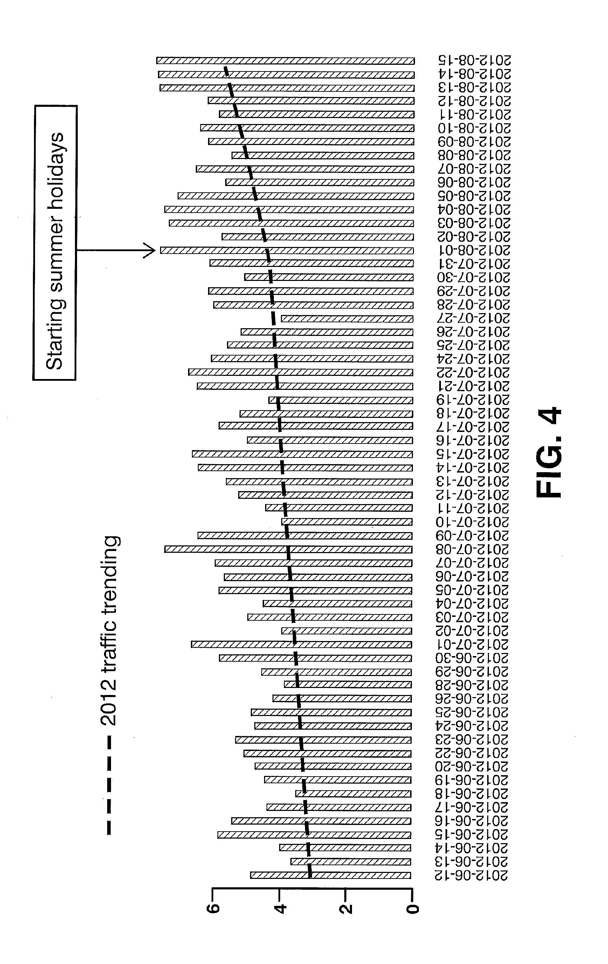

In the figure 4 an example of traffic trending and seasonality result for certain KPI can be seen. By extracting the KPI from the database and applying conventional statistical processes its trending line can be obtained. The figure 4 shows only a short period of time in the past. During this period a change in the trending line slope is detected due to the beginning of the typical summer holidays period in Spain (August 1st).

In a different time period it would be possible to detect a change in the trending line slope associated to a strategic action taken by the mobile network operator, such as the launching of a new marketing campaign. The detection occurs when crossing the detected changes in the slope with the information stored in the database that records these events.

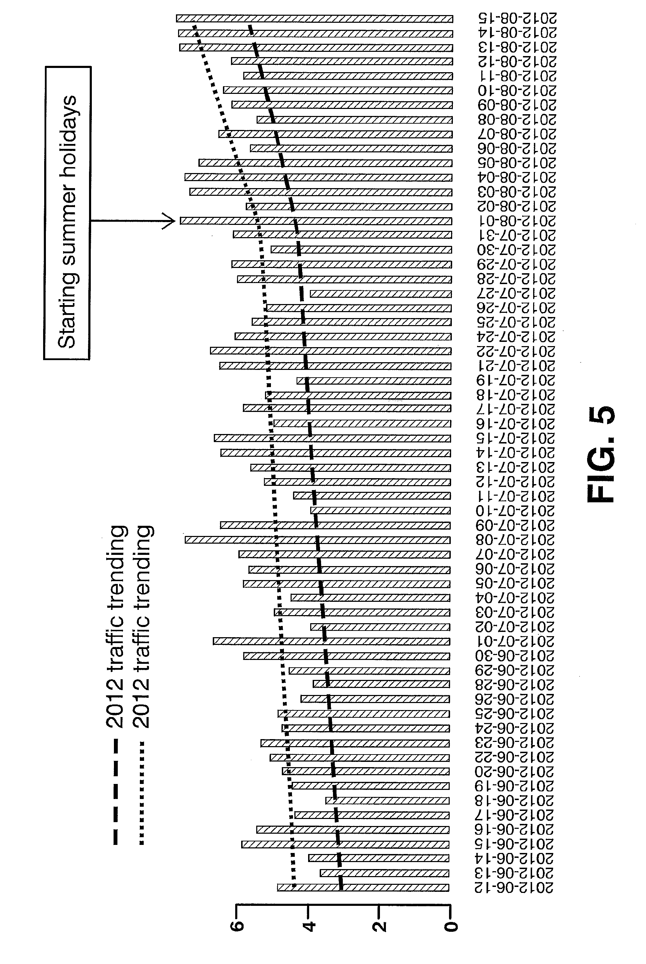

In a query to a different databases another inputs, such as the number of users (in the past and also expected ones) and the traffic per user or per application (in the past and the expected ones as well), are obtained. By comparing these values, the past and the expected ones, it is possible to extract some multiplicative factors that are then applied to the trending lines previously obtained to modify them accordingly. Taking into account also the strategic actions that will happen in the future, a final trending line can be obtained, as it is shown in the figure 5.

Finally the extended traffic KPI value for each sample in the future (daily or hourly) can be directly extracted from the new trending line obtained. The same process is applied to all the extended traffic KPIs values. The result, that is the forecasted extended traffic KPIs values, would be one of the inputs for obtaining the expected HSDPA channel usage.

Channel usage model

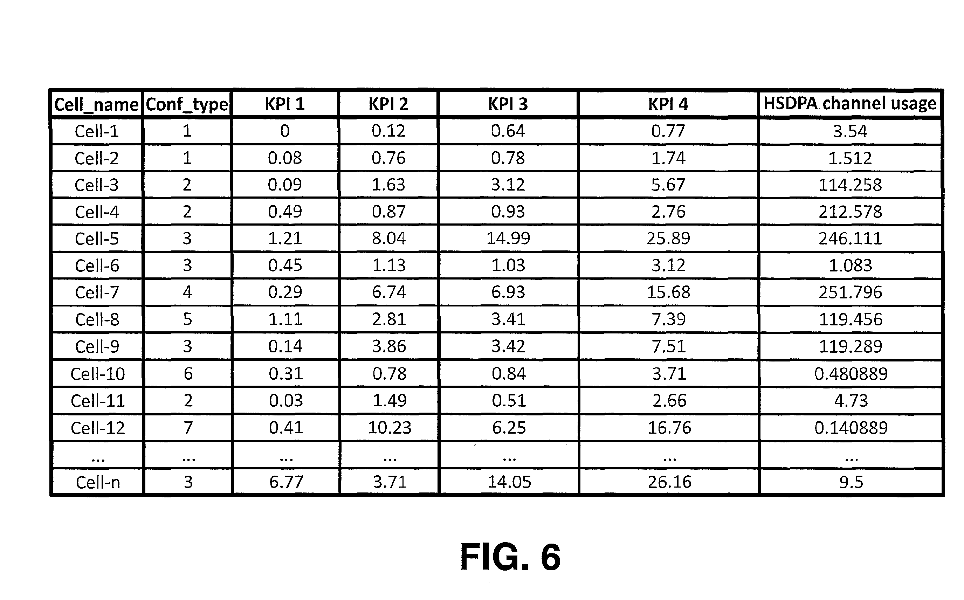

Figure 6 shows an example of the training dataset. The dataset includes for each cell (in each row) its configuration, all the selected extended traffic KPIs values (four KPIs in this embodiment) and the load resource to be modeled (the HSDPA channel usage). In this case, it has been built manually by obtaining the information from different operator's databases (one for the KPIs and another one for configuration parameters) and crossing it appropriately (by network element and date).

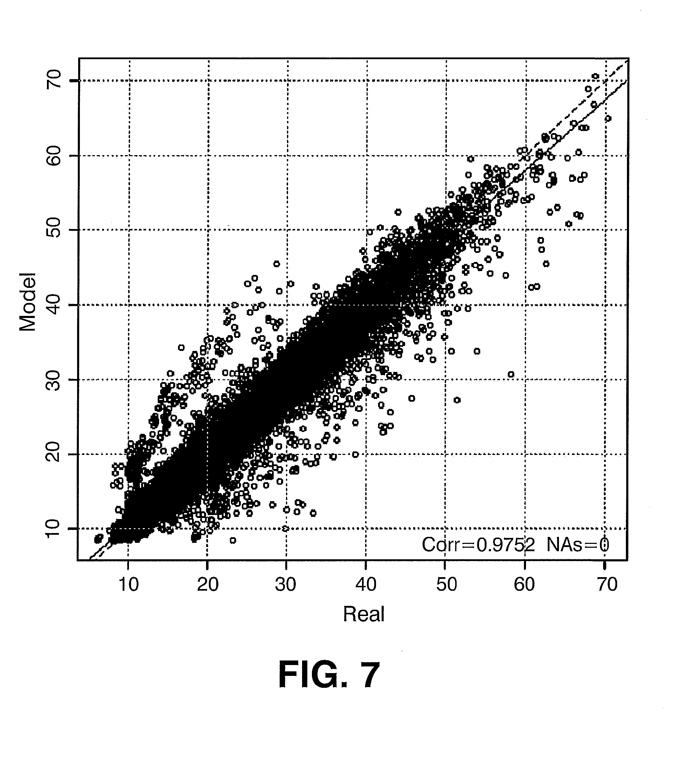

Once the training dataset is ready then the predictive model can be obtained, which is shown in the figure 7. The correlation value obtained between the real and the modeled values for the target load KPI (the HSDPA channel usage) can be seen in the figure 7. In the case shown, the correlation value is 0,9752.

Channel future usage

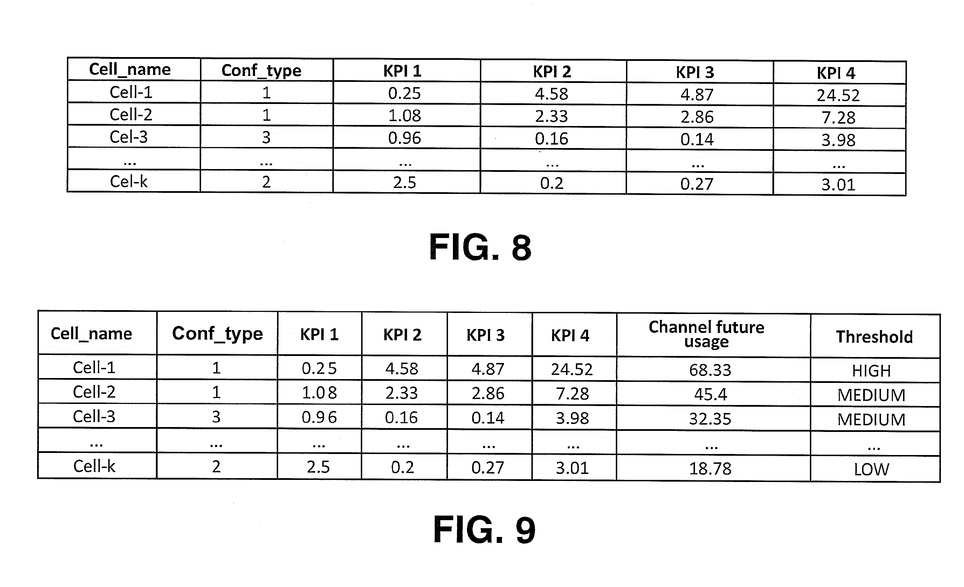

A file that can be used as a template with the forecasted extended traffic KPIs values (obtained in formula $f_1$) and the forecasted configuration parameters (extracted directly from the operator's database with configuration information) can be seen in the figure 8. In this case, one record/line with information for each single cell is required. It is also mandatory that the record/line includes values for all the extended traffic KPIs values and configuration parameters that were used in formulae $f_1$ and $f_2$.

As a result of applying the formula $f_2$ a channel future usage (predictive load KPI or HSDPA channel future usage) value will be obtained for each cell as can be seen in figure 9.

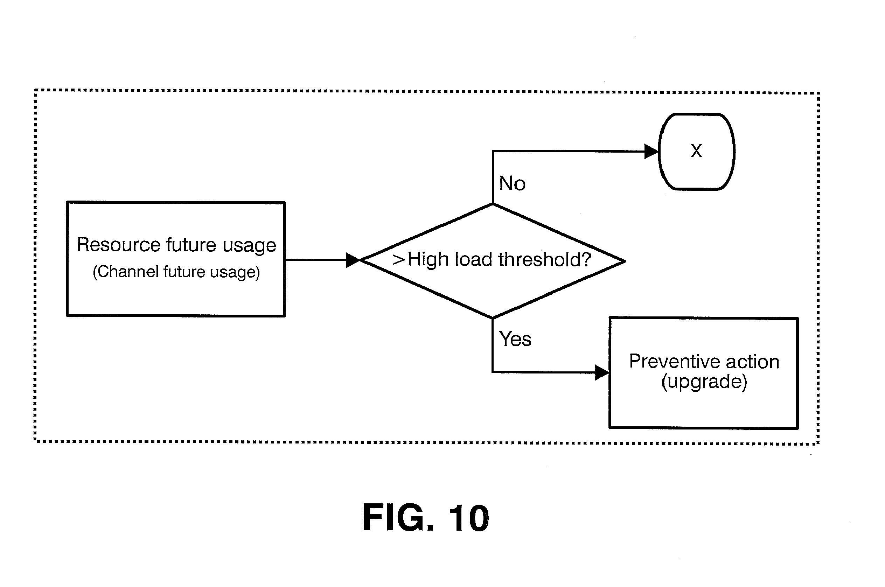

Once the resource future usage (HSDPA channel future usage) is obtained by means of $f_2$, certain predefined thresholds (established by the mobile operator in accordance to upgrading policies) can be applied to the forecasted values obtained in order to associate each one with its own load level (in terms of low, medium or high load levels). The associate block diagram is shown in the figure 10. As it can be seen in the figure, if the resource future load overcomes the high load threshold, an upgrading policy should be applied as a preventive action. This way, the invention achieves offering a solution to the high load situation before said situation have already being experienced.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Finally, the efficiency of the invention is measured in terms of accuracy applied to two different metrics: error minimization and time matching. Error minimization is defined as the difference between forecasted and actual load values (absolute values). Time matching is equivalent to the accuracy of the forecasted temporal window versus the actual time window, both in terms of window width and start time.

The benefits identified in this invention over existing solutions, when facing load prediction of shared resources, are:

- Simple calculation and easy implementation. Following a "trial and error" approach, playing with the inputs to find the best model that minimizes the error, is simpler and faster than the existing solutions to get a good accuracy.
- More flexibility, valid for any load resource and for any measurable input. The invention can be easily extrapolated to another use case following the same stages.
- More adaptable to changes in input data (when considering more or less input data). The impact of one input KPI in the accuracy of a predictive load resource is extremely easy to analyze, just including/removing this KPI in/from the input KPIs used to build the model.
- Automatic model validation measuring its expected accuracy (in terms of correlation factor as can be seen in figure 7). The machine learning algorithms can be automatically tested, as a small amount of the input data are not used for building the model but for checking its performance. The metric to check the accuracy is the correlation factor between the real value of the load KPI and the predicted one.
- Valid for 'what-if' analysis. Once the model is built, it is very powerful to perform this type of analysis. Some use cases are: changes in each input KPI to analyze the impact of each one on the load KPI, changes in the configuration in certain cells to analyze whether they have a real impact on the load of that cell or not.
- Valid for interdependencies analysis between KPIs. The invention is very useful and powerful to understand deeply the relationships and dependencies between different KPIs.
- Any improvement in terms of accuracy in identifying the time when a network element will be working in a highly loaded regime is automatically translated into savings in capital expenditures (CAPEX), as the mobile network operators can perform any upgrading actions just in time (not too early nor too late) and establish priority actions plans according to them.

- The described embodiment offers an integral solution that takes into consideration the main factors involved: the cells resource load as a function of traffic KPIs and parameters configuration, the expected traffic trends of a cell according to historical data, and marketing forecasts in relation to the number of users and traffic per user/application. These three combined components allow for an accurate prediction of the behaviour of each cell.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for predicting the channel usage of a mobile network resource, the resource being shared among several entities of the mobile network, the method comprising:

   a) obtaining forecasted traffic Key Performance Indicators, KPIs, values from external inputs and from temporal series of KPIs stored in a mobile network operator database;
   b) determining a channel usage model based on current channel usage information, selected current traffic KPIs values and current network configuration information;
   c) calculating the predicted channel usage applying the channel usage model determined to the forecasted traffic KPIs values and forecasted network configuration information.

2. A method according to any of the previous claims where the external inputs for obtaining the forecasted traffic KPIs values comprise a number of expected users, and/or an expected traffic per user and/or an expected traffic per application.

3. A method according to any of the previous claims where the forecasted traffic KPIs values consist on the expected variation of the KPIs as a function of time.

4. A method according to claim 3 where the variation of the KPIs as a function of time is modeled as a concatenation of segments of KPIs values, each segment of KPIs having a certain length.

5. A method according to claim 4 where the length of each segment of KPIs corresponds to the time during which the external inputs and the seasonality of the temporal series of KPIs are stable.

6. A method according to any of the claims 4-5 where the predicted segment of KPIs has the slope of the former segment stored in a mobile network operator database which has the highest similitude to the predicted segment in terms of the seasonality of the temporal series and external inputs.

7. A method according to any of the previous claims where the selection of the current traffic KPIs values comprises:

   a) extracting the KPIs from operator databases;
   b) calculating the correlation values between the data extracted in the previous step and the current channel usage;
   c) discarding the data extracted with correlation values under a pre-establish threshold.

8. A method according to any of the previous claims where the current network configuration comprises information about the network nodes present in the geographical area of analysis.

9. A method according to any of the previous claims where the channel usage model is determined by applying machine learning algorithms to the current channel usage, the selected current traffic KPIs values and the current network configuration information.

10. A method according to any of the previous claims where the resource is shared among several users or several cells of the mobile network.

11. A method according to any of the previous claims where the traffic KPIs are extended traffic KPIs which include user data information.

12. A method according to any of the previous claims where the resource is a High-Speed Downlink Packet Access, HSDPA, channel.

13. A system for predicting the channel usage of a mobile network resource, the resource being shared among several entities of the mobile network, the system comprising:

   a) means adapted to obtain a forecasted traffic Key Performance Indicators (KPIs) values from external inputs and from temporal series of KPIs stored in a mobile network operator database;
   b) means adapted to determine a channel usage modeling based on current channel usage information, selected current traffic KPIs values and current network configuration information;
   c) means adapted to calculate the predicted channel usage applying the channel usage model determined to the forecasted traffic KPIs values and forecasted network configuration information.

14. A computer program comprising computer program code means adapted to perform the steps of the method according to any of the claims 1-12 when said program is run on a computer, a digital signal processor, a field-programmable gate array, an application-specific integrated circuit, a micro-processor, a microcontroller, or any other form of programmable hardware.

15. A digital data storage medium storing a computer program product comprising instructions causing a computer executing the program, to perform all steps of a method according to any of the claims 1-12.

FIG. 1

FIG. 2

EP 2 750 432 A1

**FIG. 3**

FIG. 4

FIG. 5

| Cell_name | Conf_type | KPI 1 | KPI 2 | KPI 3 | KPI 4 | HSDPA channel usage |
|---|---|---|---|---|---|---|
| Cell-1 | 1 | 0 | 0.12 | 0.64 | 0.77 | 3.54 |
| Cell-2 | 1 | 0.08 | 0.76 | 0.78 | 1.74 | 1.512 |
| Cell-3 | 2 | 0.09 | 1.63 | 3.12 | 5.67 | 114.258 |
| Cell-4 | 2 | 0.49 | 0.87 | 0.93 | 2.76 | 212.578 |
| Cell-5 | 3 | 1.21 | 8.04 | 14.99 | 25.89 | 246.111 |
| Cell-6 | 3 | 0.45 | 1.13 | 1.03 | 3.12 | 1.083 |
| Cell-7 | 4 | 0.29 | 6.74 | 6.93 | 15.68 | 251.796 |
| Cell-8 | 5 | 1.11 | 2.81 | 3.41 | 7.39 | 119.456 |
| Cell-9 | 3 | 0.14 | 3.86 | 3.42 | 7.51 | 119.289 |
| Cell-10 | 6 | 0.31 | 0.78 | 0.84 | 3.71 | 0.480889 |
| Cell-11 | 2 | 0.03 | 1.49 | 0.51 | 2.66 | 4.73 |
| Cell-12 | 7 | 0.41 | 10.23 | 6.25 | 16.76 | 0.140889 |
| ... | ... | ... | ... | ... | ... | ... |
| Cell-n | 3 | 6.77 | 3.71 | 14.05 | 26.16 | 9.5 |

**FIG. 6**

EP 2 750 432 A1

FIG. 7

| Cell_name | Conf_type | KPI 1 | KPI 2 | KPI 3 | KPI 4 |
|---|---|---|---|---|---|
| Cell-1 | 1 | 0.25 | 4.58 | 4.87 | 24.52 |
| Cell-2 | 1 | 1.08 | 2.33 | 2.86 | 7.28 |
| Cel-3 | 3 | 0.96 | 0.16 | 0.14 | 3.98 |
| ... | | ... | ... | ... | ... |
| Cel-k | 2 | 2.5 | 0.2 | 0.27 | 3.01 |

**FIG. 8**

| Cell_name | Conf_type | KPI 1 | KPI 2 | KPI 3 | KPI 4 | Channel future usage | Threshold |
|---|---|---|---|---|---|---|---|
| Cell-1 | 1 | 0.25 | 4.58 | 4.87 | 24.52 | 68.33 | HIGH |
| Cell-2 | 1 | 1.08 | 2.33 | 2.86 | 7.28 | 45.4 | MEDIUM |
| Cell-3 | 3 | 0.96 | 0.16 | 0.14 | 3.98 | 32.35 | MEDIUM |
| ... | | ... | ... | ... | ... | ... | ... |
| Cell-k | 2 | 2.5 | 0.2 | 0.27 | 3.01 | 18.78 | LOW |

**FIG. 9**

**FIG. 10**

Europäisches
Patentamt

European
Patent Office

Office européen
des brevets

# EUROPEAN SEARCH REPORT

Application Number

EP 12 38 2546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/083170 A1 (SILVA CLAUDIO B [US] ET AL SILVA CLAUDIO BATISTA [US] ET AL) 20 April 2006 (2006-04-20) * paragraphs [0005], [0006], [0007], [0008], [0009] * * paragraphs [0020], [0021], [0022], [0023], [0024], [0026], [0027], [0028] * | 1-15 | INV. H04W24/00 |
| Y | EP 1 868 320 A2 (GROUNDHOG TECHNOLOGIES INC [US]) 19 December 2007 (2007-12-19) * paragraphs [0003] - [0009], [0011], [0012] * | 1-3,9, 10,13-15 | |
| Y | US 2009/075655 A1 (DOBSON ROBERT WILLIAM ALBERT [GB] ET AL) 19 March 2009 (2009-03-19) * paragraphs [0102], [0170] - [0172] * | 4,5,8 | |
| Y | US 6 996 374 B1 (BAO DEREK HONGWEI [US] ET AL) 7 February 2006 (2006-02-07) * paragraphs [0023], [0024], [0053], [0099] - [0101], [0137], [0138] * | 6,7 | TECHNICAL FIELDS SEARCHED (IPC) H04W |
| Y | "Universal Mobile Telecommunications System (UMTS); LTE; Telecommunication management; Key Performance Indicators (KPI) for Evolved Universal Terrestrial Radio Access Network (E-UTRAN): Definitions (3GPP TS 32.450 version 11.0.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 5, no. V11.0.0, 1 October 2012 (2012-10-01), XP014075653, * 6.1.1.2 Extended definition * | 11,12 | |

The present search report has been drawn up for all claims

| Place of search | Date of completion of the search | Examiner |
|---|---|---|
| Munich | 10 May 2013 | Mele, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 12 38 2546

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2013

| Patent document cited in search report | Publication date | Patent family member(s) | Publication date |
|---|---|---|---|
| US 2006083170 A1 | 20-04-2006 | NONE | |
| EP 1868320 A2 | 19-12-2007 | AT 477642 T<br>EP 1868320 A2<br>US 2008109731 A1 | 15-08-2010<br>19-12-2007<br>08-05-2008 |
| US 2009075655 A1 | 19-03-2009 | AT 533319 T<br>EP 2196049 A1<br>EP 2196050 A1<br>ES 2377059 T3<br>GB 2452796 A<br>GB 2461242 A<br>US 2009075655 A1<br>WO 2009034367 A1<br>WO 2009034391 A1 | 15-11-2011<br>16-06-2010<br>16-06-2010<br>22-03-2012<br>18-03-2009<br>30-12-2009<br>19-03-2009<br>19-03-2009<br>19-03-2009 |
| US 6996374 B1 | 07-02-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110149782 A1
- US 7099674 B2